(19) Europäisches Patentamt
European Patent Office
Office européen des brevets

(11) **EP 3 399 759 B1**

(12) **EUROPEAN PATENT SPECIFICATION**

(45) Date of publication and mention
of the grant of the patent:
**16.07.2025 Bulletin 2025/29**

(21) Application number: **18170778.7**

(22) Date of filing: **04.05.2018**

(51) International Patent Classification (IPC):
*H04N 19/86* (2014.01)    *H04N 1/41* (2006.01)

(52) Cooperative Patent Classification (CPC):
**H04N 1/41; H04N 19/86**

(54) **PRE-COMPRESSION FILTER**

VORKOMPRESSIONSFILTER

FILTRE DE PRÉ-COMPRESSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.05.2017 IT 201700049064**

(43) Date of publication of application:
**07.11.2018 Bulletin 2018/45**

(73) Proprietor: **Sky Italia S.R.L.**
**20138 Milano (IT)**

(72) Inventors:
• **Bertolotti, Massimo**
**20138 Milano (IT)**
• **Crespi, Stefano**
**20138 Milano (IT)**
• **Ubertini, Gabriele**
**20138 Milano (IT)**

(74) Representative: **Hoffmann Eitle**
**Patent- und Rechtsanwälte PartmbB**
**Arabellastraße 30**
**81925 München (DE)**

(56) References cited:
**US-A1- 2007 076 803**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a method, entity, system, computer program and medium for instructions executable by a computer for processing a video signal.

BACKGROUND OF THE INVENTION

The performance of live encoders based, for example, on AVC or HEVC standards is rapidly improving. However, if compared with the respective offline counterparts, online encoders still have a gap to overcome in terms of the ratio between quality and bitrate. This gap is due, among many other factors, to the complexity of encoding algorithms, which require a very detailed, in-depth analysis of the video in terms of temporal and spatial correlation. Live encoders, apart from a small initial delay, must produce compressed frames at a constant fixed speed (for example, at a speed or rate of 40ms for 25fps, or of 33ms for 30fps, where fps stands for frames per second). This time constraint precludes carrying out an accurate, in-depth analysis of the video signal. Because of this time constraint, moreover, a live encoder cannot fully exploit the complete set of strategies and/or technique and/or methods of compression which are by contrast available according to AVC and HEVC standards; indeed, only a reduced set of such strategies and/or methods and/or techniques are usable, with attention being focused on efficiency in terms of processing power versus compression efficiency. In contrast, in offline compression there are no time constraints, since the compression is performed independently of the broadcasting of the contents (that is, of the instant in which they are transmitted towards one or more users), the reason why in such compression it is possible to exploit all of the techniques provided by the standards. And indeed, typically, in offline encoders every single frame can be analysed, compressed, decompressed, (re)analysed and recompressed in order to improve the compression ratio and/or the quality thereof, such as, for example in multi-pass encoders, in which such processes can be iterated several times. Live compression or live encoding thus differs from offline compression or encoding in that the time constraints preclude carrying out a wide range of processes and/or analyses and/or iterations thereof.

Live encoders designed or developed for distribution work under the most critical conditions: they must maximise quality (as perceived by the end user) at low bitrates (to minimise distribution costs). Encoder developers confront this technical challenge on the basis of their experience; for example, they know which methods are most efficient in terms of available processing resources. For example, the technique based on motion estimation offers very high compression ratios, but consumes a large amount of processing resources; another technique is based on varying the number of reference frames, where the compression efficiency decreases rapidly when the number of such reference frames increases beyond three or four frames. An expert is typically capable of choosing the technique best suited to each case.

Another method typically used by compression processes is based on quantisation estimation. Quantisation has a direct impact on the quality/bitrate ratio. However, evaluating the exact amount of quantisation to use also has an impact on the other available methods, thus making them more or less efficient depending on the quantisation level chosen. The multidimensional complexity of quantisation estimation has forced encoder developers to use predictive algorithms that are mainly derived from pre-calculated settings rather than from an analysis of the video in full depth. The result of this approach is that the quality/compression ratio is good or very good only for a small predefined range of bitrates, but decreases drastically when the bitrate goes outside that range. It may be noted, moreover, that offline encoders, in order to provide a higher quality/bitrate ratio than online or real-time encoders, require a high computing power and/or long processing times. In short, it may be said that online encoders are not capable of providing a high quality/bitrate ratio comparable to that of their offline counterparts.

The document US2007/076803A1, entitled "Dynamic pre-filter control with subjective noise detector for video compression" constitutes relevant prior art.

SUMMARY OF THE INVENTION

One of the objects of the present invention is to remedy the problems encountered in the prior art, and among these, that of improving the techniques for encoding images and/or videos existing in the art.

According to a first aspect not encompassed by the wording of the claims and referred to as A1, there is provided a method for processing a video signal, said video signal comprising at least one frame comprising a first image, the method comprising the steps of:

- performing (S200) a processing on said first image (A) to obtain a second image (A') corresponding to said first image (A);
- determining (S300) a correction factor on the basis of an analysis (S300) of said second image (A') in relation to said first image (A);

- applying (S400) said correction factor to at least a part of said frame (A) to obtain at least one corrected frame (A").

According to an optional aspect A2, the method according to A1 further comprises a step of performing a compression (S600) on said at least one corrected frame (A"), wherein said processing is a first processing, and wherein said compression comprises a second processing preferably identical to the first processing.

According to an optional aspect A3, in the method according to A1 and/or A2, said analysis of said second image (A') relative to said first image (A) provides an analysis index indicative of a level of degradation introduced by the first processing in the second image relative to the first image.

According to an optional aspect A4, in the method according to one or more of any between A1 and A3, the correction factor is a factor to be applied to the first image in order to modify at least in part the degradation introduced by the first processing.

According to an optional aspect A5, in the method according to any one of the preceding claims, said first processing (S200) comprises a transform coding.

According to an optional aspect A6, in the method according to A5, said transform coding comprises at least one between a discrete cosine transform and a wavelet transform.

According to an optional aspect A7, in the method according to A1 and A6, said first processing (S200) comprises a quantisation process.

According to an optional aspect A8, in the method according to one or more of any between A1 and A7, the analysis comprises a pixel-by-pixel comparison of at least one set of respective pixels of said first image and of said second image.

According to an optional aspect A9, in the method according to one or more of any between A1 and A8, the analysis comprises at least one among: an analysis of the high-frequency errors introduced by said first processing, an analysis of the estimation of edge and/or contrast details in the first image and an estimation on the details of dark areas in the first image.

According to an optional aspect A10, in the method according to one or more of any between A1 and A9, determining the correction factor comprises determining the correction factor by means of a transfer function that weights the results provided by a plurality of analyses, and preferably on the basis of frames preceding and/or following said frame.

Optionally, any one of the aspects described above (or any combination thereof) comprises a step of performing a compression by means of a live encoder on said at least one corrected frame (A"). It should be noted that the processing performed on the first image is distinct from the compression. In fact, the processing can be a process comprised in an encoding process applicable to the initial image (included in a stream to be encoded), but distinct from a compression likewise comprised in an encoding process applicable to the initial image. In other words, a process of encoding the initial image comprises a processing and a compression, wherein the former is the one applied to the first image.

Optionally, in any one of the aspects described above (or in any combination thereof), the video signal is subjected to an encoding process comprising a processing and a compression, and wherein the processing comprised in the encoding process is not necessarily the processing performed on said first image to produce said second image.

Optionally, in any one of the aspects described above (or in any combination thereof), applying the correction factor comprises modifying said at least a part of the frame in such a way that at least a part of the corrected frame is not removed by a subsequent encoding step. For example, modifying comprises at least one among amplifying at least some of the frequencies of said at least a part of said frame, increasing a noise level (increasing the film granularity) of said at least a part of said frame, and increasing the sharpness of said at least a part of said frame. Preferably, the sharpness is increased in a part of the frame that represents edges of an image or part of an image, and/or of a part of the frame that represents a transition between one or more images.

Optionally, in any one of the aspects described above (or in any combination thereof), applying (S400) said correction factor comprises modifying at least a part of said frame (A) in order to introduce into the corrected frame modifications corresponding to the correction factor and such that an encoding step performed downstream on the corrected frame produces non-null encoded components in said at least a modified part of the frame.

Optionally, in any one of the aspects described above (or in any combination thereof), said analysis outputs an analysis index, wherein determining (S300) a correction factor on the basis of said analysis (S300) comprises determining a correction factor corresponding to the analysis index, and wherein the correction factor and the analysis index are associated with each other so that a correction factor generates the corrected frame with at least one of the amplified frequency components.

According to an aspect A11, there is provided an entity (400) for processing a video signal, said video signal comprising at least one frame comprising a first image, the entity comprising:

- a processing means (420) configured to perform a processing on said first image (A) so as to obtain a second image (A') corresponding to said first image (A);

- a determination means (430) configured to determine a correction factor (CF) on the basis of an analysis of said second image (A') relative to said first image (A);
- a correction means (440) configured to apply said correction factor to at least a part of said frame (A), thereby obtaining at least one corrected frame (A").

The entity of the aspect A11 can moreover be optionally configured to implement (by means of one or more respective units, or via a respective means) or take into account one or more of the aspects from A2 to A10.

According to an aspect A12, there is provided a computer program containing instructions configured to execute, when said program is run on said computer, the steps according to one or more of the aspects A1 to A10.

According to an aspect A13, there is provided a medium suitable for containing instructions configured to execute, by means of a computer, the steps according to one or more of the aspects from A1 ad A10.

According to an aspect A14, there is provided a system for processing a video signal, said video signal comprising at least one frame comprising a first image, said system comprising an entity according to the aspect A11 and an encoder capable of encoding the corrected frame obtained by means of said entity. Preferably, said encoder is capable of encoding a video signal containing the corrected frame obtained by means of said entity.

None of the above aspects A1 to A14 is encompassed by the wording of the claims but they are considered as useful for understanding the invention.

LIST OF FIGURES

Figure 1 is a flow diagram according to a first embodiment of the present invention;
figure 2 is a block diagram of an entity for processing video signals according to a second embodiment;
figure 3 is a block diagram of a computer according to a further embodiment;
figure 4 is a diagram used to illustrate the operation of the invention;
figures 5a and 5b represent examples of images of a video signal;
figure 6 is a block diagram illustrating an example according to the present invention;
figure 7 is a block diagram used to illustrate, with a non-limiting example, the differences between the present invention and a conventional encoder;
figure 8 is a block diagram relating to an example according to the present invention;
figure 9 is a block diagram representing a transfer function according to an example of the present invention.

DETAILED DESCRIPTION

In general terms, the present invention is based on the recognition that applying a pre-distortion to the starting image can help an encoder, in particular of the live type, to produce compressed images that are perceived by the end user as being of higher quality. In other words, because of how the human system of vision is physiologically characterised, the user perceives an image or a video that has been appropriately pre-distorted and then subjected to compression as being of better quality than the same image or video subjected to the same compression, but without that appropriate pre-distortion. The pre-distortion can be applied by means of a filtering step or a filter unit, which is transparent to the encoder: in fact, the filter is applied to the source stream (in digital format, compressed or non-compressed), for example in HD-SDI format, and does not necessarily require any change to the encoder configuration. The filter in question can apply a temporal and/or spatial analysis to identify, for example, parameters such as the sharpness of an image, the presence of granularity, high detail edges, power at high frequencies, and/or amplitude and predominance of the colour components; moreover, the filter can apply specific transfer functions, and/or a temporal and/or spatial filtering. The starting image can be an image in a non-compressed format, such as, for example, HS-SDI, but not necessarily. In fact, what is illustrated here equally applies for cases in which the starting image is in a compressed format, e.g. in a compressed format in a mode with no loss or with minimum or limited loss (as used, for example, in solutions involving transport over IP, in which the transported signal is not in the HS-SDI format, but has rather been subjected to a certain compression). As also explained further below, in order to apply the pre-distortion, an original image (belonging to the input stream to be compressed) is subjected to processing; the processed image is then analysed in relation to the original image, and the pre-distortion factor to be applied is determined on the basis of the result of the analysis. The processing applied to the original image is not a compression, but contains some of the (initial) steps of an encoding process. As is well known in the art, in fact, an encoding process comprises a processing of the initial image aimed at identifying and removing redundant information in the original signal which is not necessarily visible to/distinguishable by an average observer, followed by a compression aimed at reducing the number of bits necessary to represent the image. With reference, for example, to the MPEG standard, the processing can include a transform such as the DCT, a step of estimating and/or compensating for the movement between neighbouring frames (motion compensation) and a quantisation step: however, such processing steps can produce a number of bits for the image that is larger than the number of bits necessary to represent the same starting image. The subsequent compression step (for example based on the Variable Length Code (VLC) technique; other compression techniques are possible) reduces the number of bits actually necessary to represent the image. In practice, reference is sometimes made indistinctly also to the encoding process with compression, since the various steps thereof can contribute directly or indirectly to a more compact representation of a video signal; as is clear also from what is described in the present disclosure, processing as understood herein refers to some of the steps of the encoding process, preferably the steps that do not entail an analysis of one or more neighbouring frames, and/or the steps that do not entail a compression of the number of bits necessary to represent the image by means of the information obtained from the processing. The processing comprises a transform and a quantisation.

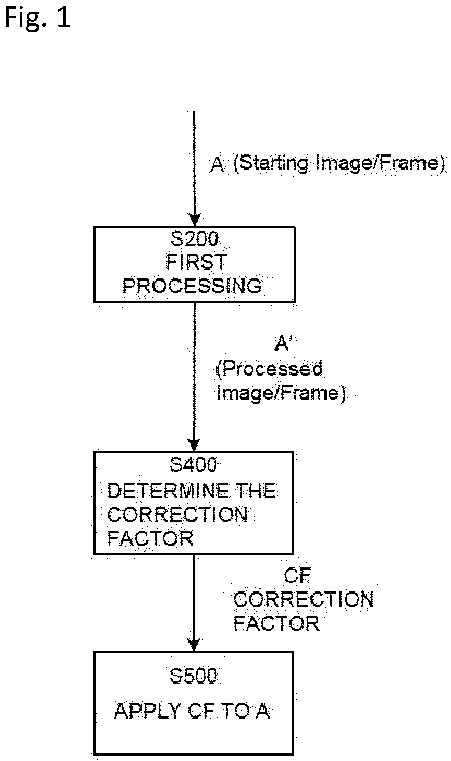

With reference to figure 1, a first embodiment relating to a method for processing a signal comprising at least one video signal (to be subjected to encoding) will now be illustrated, wherein the video signal comprises at least one frame comprising in turn a first image. Encoding, as is well known in the art and discussed further below, typically comprises processing and compression. The video signal to be processed is preferably a non-compressed video signal; in the event that it is in an already compressed form, it can be decompressed or decoded to obtain the video signal to be processed subsequently. In addition to an image, the frame can also comprise further information related to the image or to the stream in which the frame is comprised; however, the frame can coincide with the whole image. Moreover, first image can also be understood as only a part of the whole image included in the frame, in which case the subsequent processing will refer solely to a part of the image included in the frame. The method comprises a first step S200 of performing a processing of the first image A so as to obtain a second image A' corresponding to the first image (processed). Based on what was previously said, the first processing can then be performed on the whole frame, the whole image included in the frame and/or only a part thereof. It can thus be said that the second image represents a processing of the first image.

In a step S300, a correction factor is determined on the basis of an analysis of the second image in relation to the first image. In other words, the second image is subjected to an analysis, having, for example, the first image as a reference or basis of comparison, which produces a result based on which the correction factor is determined. In yet other words, the content of the second image is analysed in relation to the content of the first image. In one example, the correction factor is determined on the basis of the differences between the first image and the second image, for example pixel by pixel for all the pixels of the respective images or only a part thereof. Moreover, use can be made of any mathematical function that puts one or more pixels of one image in relation with one or more pixels of the other image. The correction factor can also be called pre-distortion factor. Moreover, the correction factor can optionally be determined also on the basis of other frames preceding and/or following the one to which the first image belongs (hereinafter, also the frame in question). The correction factor can be determined on the basis of the analysis in different ways: for example by means of an association between values provided as a result of the analysis and respective values of the correction factor; the association can be implemented, for example, by means of a table in which every row (or column) puts an analysis index (or value of the result) in relation with an index (or value) of the correction factor. Such an association can be obtained empirically, for example, or on the basis of knowledge of the downstream compressor or of the parameters of the downstream compressor which will then proceed to compress the pre-distorted signal. The empirical association between an analysis index and a correction index can be made by selecting, for example, from among multiple possible correction factors, the one that is capable of producing a compressed image or video that is perceived by the end user as being of higher quality; the choice can be made by means of different attempts carried out on a same starting video signal taken, for example, as a reference video. As also explained further below, in general it is possible to apply any method of image analysis, such as those used, for example, by real-time encoders to identify which parts of the images can be more greatly degraded without excessively impacting quality. In step S400, the correction factor is applied to at least a part of the frame A (or of the image included in the frame), thereby obtaining a corrected frame A".

Thanks to the application of the correction factor to the first image, it is possible to obtain a modified image A" of the video stream which in itself has characteristics such as to be able to be better compressed, or has characteristics such as to be able to generate a compressed video stream of higher quality than when the same video compression is applied to an image that is not pre-distorted. It thus follows that a pre-distorted image on its own possesses characteristics such as to be able to provide, at the encoder output, a video having a higher quality/bitrate ratio than the encoding of the original video. In order to obtain a better video output, it is sufficient to pre-distort even only part of the image A, although the effects are improved by increasing the portion of the image A subjected to pre-distortion. Moreover, it is possible to obtain said improvement in quality both in cases in which the initial image is not compressed, and in cases in which it is not compressed; in particular, if the compression of the initial image results in no loss or only a limited loss, it is possible to obtain an improvement in the compressed image downstream comparable with that obtained in the case of an initial image that is not compressed. The fact remains that the quality can also be increased (compared to when the pre-distortion is not applied) also if the initial image is in a more greatly compressed format, i.e. with a certain degree of losses.

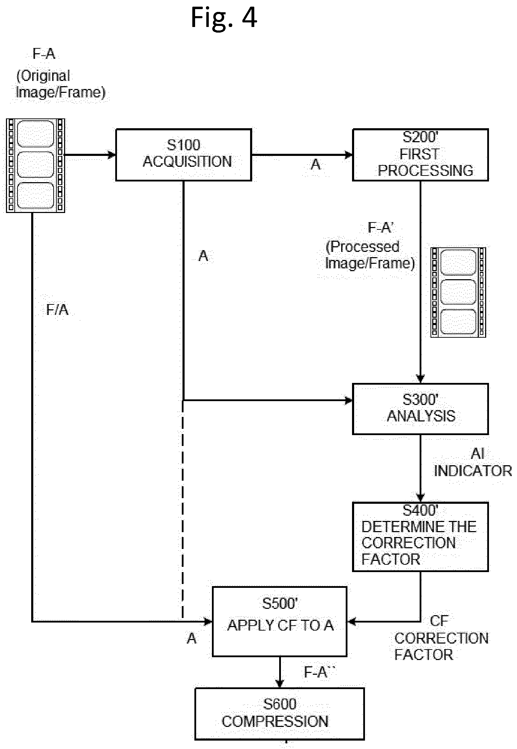

According to an aspect of this embodiment, the method comprises a step of performing (exemplified in step S600 of figure 4, described further below) a compression on the corrected frame A". The corrected frame is subjected both to processing and compression provided by an encoder (observing, as also explained further below, that the processing necessary to produce the second image need not necessarily be identical to the processing applied to the pre-distorted image); in a further optional manner, the corrected frame can be subjected to all the processing and correction steps of an encoder. The compression comprises a live compression, and can be performed by means of a live encoder on said at least one corrected frame (A"). Live compression and/or live encoder/encoding means a compression or encoding to be performed under time constraints such as those dictated by a broadcasting of live audiovisual content. It should be noted that the processing performed on the first image is distinct from compression. In fact, the processing can be a process comprised in an encoding process applicable to the initial image (included in a stream to be encoded), but distinct from a compression likewise comprised in an encoding process applicable to the initial image. In other words, a process of encoding the initial image comprises processing and compression, wherein the former is applied to the first image. Optionally, this compression comprises a processing that is preferably identical to the processing described above. In other words, the compression comprises the process for reducing the number of bits representing the image, and can also comprise part or whole of the previous processing in which the redundant information present in the starting image is identified and removed (i.e. the compression can be the whole encoding process, or only a part thereof comprising the steps in which the number of bits necessary to represent the image is reduced). As also further illustrated below, the live encoder used can be any live encoder, also a known one, to which the pre-distorted image is input. The invention also applies to the case of a non-live (offline) encoder, leading in this case as well to an improvement in the compressed image. It has been observed, however, that in the event of use with an online encoder a considerable improvement is observed, greater than that in the event of use with an offline encoder, in particular an improvement not otherwise achievable with other techniques applicable to online encoders.

According to an optional aspect of the method, the analysis of the second image A' relative to the first image A provides an analysis index indicative of a level of error introduced by the first processing (for example that of step S200) in the second image relative to the first image. In other words, the analysis index provides an indication of the degradation introduced by the processing of the original image, wherein the degradation is that which is perceivable by the end user when viewing the original processed image possibly subjected to successive final compressions. In yet other words, the analysis index provides an indication of the error introduced, considering, for example, cases in which the processing is part of a compression, by approximations or discarding of information introduced by the processing.

According to an optional aspect, the correction factor is a factor (based on what was said above, obtained on the basis of the analysis) to be applied to the original image A in order to modify at least in part the degradation or error introduced by the first processing. Preferably, modifying at least in part the error or degradation results in a decrease in or compensation for the degradation or error introduced. The correction factor is thus selected so that, once applied to the image A, it prevents a compression on the pre-distorted image A" from introducing certain imperfections or degradation, or limits them.

According to an aspect of the method, the first processing S200 comprises a transform coding. For example, the transform coding can comprise at least one between a discrete cosine transform and a wavelet transform. However, the invention is not limited to such transforms and can in fact also be applied to other types, for example of colours, luminance, etc.

According to an aspect, in the aforesaid method the first processing S200 comprises a quantisation process. According to another optional aspect of the method, the analysis comprises a pixel-by-pixel comparison of at least one set of pixels of the first image A and a set of (respective) pixels of the second image A'. According to a further optional aspect of the method, the analysis comprises at least one among or any combination of: an analysis of the high-frequency errors introduced by the first processing, an analysis of the estimation of edge and/or contrast details in the first image and an estimation on the details of dark areas in the first image A.

According to a further optional aspect of the method, determining the correction factor comprises determining the correction factor by means of a transfer function that weights, by means of respective coefficients or weights, the results provided by a plurality of analyses or methods of analysis. The coefficients can be different from one another, also equal to one (all or only one or more of them), and can be determined on the basis of experiments, on the basis of knowledge of the effects produced by the first compression, etc., as is clear also from what is explained here below. Preferably, in determining the correction factor, one or more frames preceding and/or following the frame to which the image A belongs can be taken into consideration.

According to a further aspect of the method, a step of performing a compression by means of an encoder, by a live encoder, on the corrected frame (A") is included, wherein the processing performed on the first image is distinct from the compression - processing and compression being in fact two distinct processes or stages within an encoding process such as in the MPEG (the same applies for other encoding algorithms, as they are in fact distinguished by these two macro types of phases).

According to a further optional aspect of the method, the video signal is subjected to an encoding process comprising a processing and a compression, wherein the processing comprised in the encoding process is not necessarily the processing performed on said first image to produce said second image.

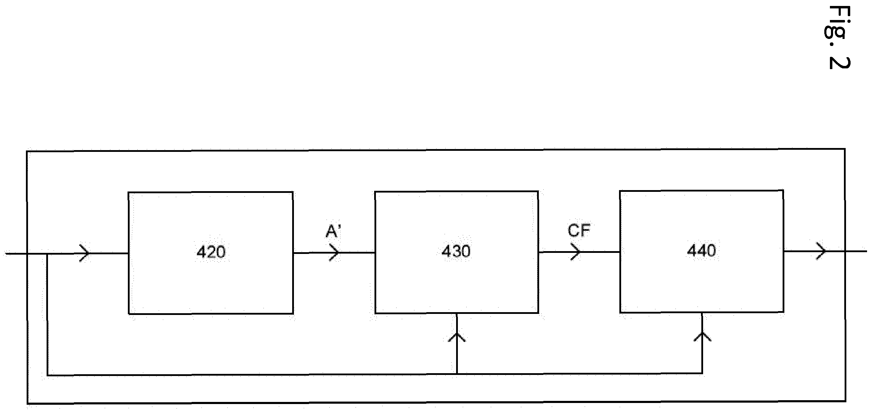

A second embodiment will now be illustrated with reference to figure 2, which shows an entity 400 for processing a signal comprising at least one video signal, wherein the video signal includes a frame comprising in turn a first image. The entity 400 comprises a processing means 420, a determination means 430, and a correction means 440. The processing means 420 is configured to perform a processing on the first image A so as to obtain a second image A' corresponding to the first image A. The determination means 430 is configured to determine a correction factor on the basis of an analysis of the second image A' relative to the first image A. In other words, an analysis of the second processed image relative to the first starting image A is carried out and on the basis of the result of said analysis a correction factor is determined. The correction means is configured to apply the correction factor to the starting frame so as to obtain a corrected frame A". It may be noted that all the considerations set forth with reference to the first embodiment also apply for the present one and for the following embodiments, as well as the various examples; thus, for the sake of brevity, they will not be repeated. Therefore, it may be immediately noted that the entity 400 comprises means or units configured to implement any combination of the aspects (also the optional ones) described above or the aspects illustrated further below with reference to the examples in any combination thereof. With reference to figure 2, it is noted that, although a processing means 420, determination means 430 and correction means 440 have been described, the entity 440 may be equally described as comprising a processing unit 420 (or processor 420), a determination unit 430 and, respectively, a correction unit 440. It is further noted that the described units 420, 430 and 440 can be part of a same processor or processing circuit, or of distinct processors, or of distinct processing circuits. Moreover, the entity (or any part or unit thereof) can in general be made in any combination of software and/or hardware, both in a localised manner (i.e. in a same device) and in a distributed manner (i.e. implemented on different devices interconnected to one another in any way).

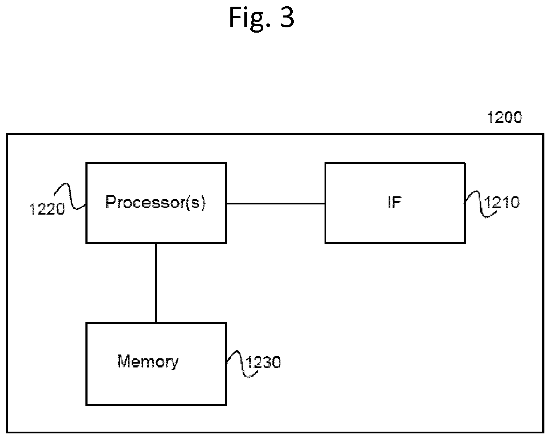

A third embodiment will now be introduced with reference to figure 3, which illustrates a computer program containing instructions configured to execute, when the program is run on said computer, one or more of the steps of the method described with reference to the first embodiment, including one or more of the aspects indicated as preferable or optional and in any combination. Figure 3 illustrates a block diagram of said computer, which comprises a processor 310, a memory 320, and an interface IF 30, wherein the processor 310 is capable of exchanging data with the memory and with the interface. The interface is moreover capable of exchanging data with external units and/or with a user. The aforesaid instructions can be memorised in the memory 320 and executed by the processor 310 as needed. The starting image or images can be input to the processor via the interface, and optionally memorised in the memory 320, although this is not strictly necessary, since the processor can process the images without the necessity of having to store them in the memory 320, for example where on-the-fly processing is possible or only small blocks of the image are memorised in an internal cache of the processor.

A further embodiment, not illustrated, provides a medium suitable for containing instructions configured to execute, by means of a computer (such as the one illustrated in figure 3 for example), one or more of the steps, also in any combination, of the method described above or the examples illustrated further below. Medium means any medium capable of memorising or transmitting information and comprises, by way of example, a flash memory, ROM, RAM, EPROM, etc., as well as media such as CDs, DVDs, etc. Moreover, a wireless signal or a signal transmitted by cable represent further examples of the medium, since it is in fact conceivable to transmit the instructions to an entity that executes them.

According to a further embodiment, there is provided a system for processing a video signal, wherein the video signal comprises at least one frame in turn comprising a first image. The system includes an entity such as the one envisaged, for example, in the second embodiment, and in particular an entity capable of calculating a correction factor to apply at least to a part of a frame of a video signal, and an encoder capable of encoding the corrected frame and obtained by means of said entity. Preferably, the encoder included in the system is capable of encoding the video signal in which the corrected frame is contained.

With reference to the diagram in figure 4, an example according to the present invention will be illustrated by way of example. In the example, a video signal F-A, preferably in a non-compressed format (for example HD-SDI, SDI, etc.) and comprising at least one frame F inside which there is a non-compressed image A is taken into consideration. For the sake of simplicity, we will make reference indistinctly to a frame F or an image A (or also to F-A), since based on what has already been said the invention applies equally to cases in which a frame is composed solely of an image, or comprises an image and other information, or to cases in which the invention is also applied instead to only a part of the image contained in the frame. In step S100 the image or part of the image A is acquired from the original video signal. In step S200' the image A is subjected to a first processing, which thus represents an example of the step S200 described above. As a result, one thereby obtains an image A' (or frame F'), and if the process is repeatedly followed for successive frames, it is possible to obtain a sequence of images or frames F-A' subjected to said first processing. In step S300' a first analysis is performed on the basis of the processed image F-A' and of the starting image A acquired from the video signal. In one example detailed below, the first processing comprises a discrete cosine transform and a quantisation of the starting image A. For the purpose of performing the analysis, the processed image A' is subjected to an inverse processing, i.e. an operation of de-quantisation and an inverse transform DCT are carried out, thus effectively obtaining an image F-A' which corresponds to the starting image A, in the sense that it is a degraded representation from the starting image, the degradation having been introduced by the first processing S200'. In the step of analysis S300', each pixel of the starting image A is compared with the respective pixel of the degraded or processed image A' to produce, as a result, an analysis index. The analysis index thus indicates a level of degradation or a level of error caused by the first processing S200'. The degradation or level of error means a degradation or an error perceived by the end user. The first processing S200' comprises some of the initial steps typical of a compression algorithm, more precisely, a transform and a quantisation as used in a conventional compression method. The analysis index thus represents a measure of the perception of a loss of quality on the part of the end user if he or she views the image A' compared to A (or if he or she views the compressed video from the pre-distorted image A' compared to the compressed one from the original image A). It is in fact well known that processing (in particular compressions) of the image using algorithms such as transforms and/or quantisations, alter the digital representation thereof so as to reduce the bandwidth necessary for transmission, at the same time modifying the image itself to a point where the human system of vision is able to perceive the compression as characterised by an image of inferior quality (in other words, the reduction in bandwidth can be increased until the compressed result is perceived as unacceptable). In step S400', a correction factor is determined on the basis of the analysis index. It is conceivable, for example, to empirically prepare a table in which a given analysis index is associated with a certain correction index. In step S500', the correction factor CF thus determined is applied to the starting image/frame F-A, thus obtaining a pre-distorted frame/image F-A". In the example of figure 4, the frame thus pre-distorted is input to a common encoder or compressor, which will then produce a compressed frame Fcomp. The correction factor is selected in such a way as to modify, and preferably to reduce or eliminate, at least a certain type of degradation which the downstream compressor S600 has the tendency of introducing into the images. For example, the design of the downstream compressor could be such as to remove high frequencies exceeding a certain threshold, which frequencies could produce in the end user a perception of reduced or compromised quality of the compressed image. By means of the correction factor, it is thus possible to modify the image so as to ensure that at least a part of the high frequencies is corrected (for example amplified), so that they are not removed by the encoder; this is possible without modifying the compressor or the parameters of the downstream compressor. Therefore, the factor will for example apply a correction coefficient to the high frequencies of the starting image, so that they no longer fall below the threshold (where they are cut out), but are rather above the threshold used by the downstream compressor in order possibly to maintain them, even only in part. It follows that during compression, since such high frequencies will no longer be removed, the end user will have a perception of high or better quality. Obviously, the correction factor can be selected so that some of the high frequencies are in any case removed (for example in order to obtain a certain compression factor), but not to the same extent in which they would be removed by the downstream compressor without this pre-distortion. In other words, by means of an appropriate selection of a correction factor it is possible to improve the quality/bitrate ratio of a compressed signal. There are different ways to be able to implement step S600; only some of them will be listed below by way of example, but the invention is not limited to these. A first analysis index can be produced empirically on the basis of the images A' and A, and then a series of pre-distortion attempts (and subsequent compression) can be carried out with different correction factors CF1, CF2, etc., applied, for example, to a reference video signal, and then the quality of the respective compressed videos obtained downstream of the compressor S600 tested for each of the respective correction factors FC1, FC2, etc. At this point, it is possible to select the correction factor CFj which is capable of generating downstream a compressed video perceived as the one with the best quality. At this point, in the table the first analysis index will be associated (on an empirical basis) with the correction factor CFj. The procedure can then be repeated for other analysis indexes and for any number of analysis indexes. Each analysis index can be obtained by means of one or more methods of analysis, as is also further discussed below. It is noted that the first processing S200' is the same processing or at least the same type of processing followed in the initial steps of the downstream compressor S600. For example, the transform DCT and the quantisation parameters executed in step S200' are the same as those then executed downstream by the compressor S600 (it is clear that the downstream processor S600 typically comprises other steps that make it possible actually to obtain a compressed image; it is not necessary to implement those further steps in step S200'). In such a case, therefore, it is conceivable to obtain an association between an analysis index and a correction factor based on knowledge of the characteristics of the transform and of the quantisation parameters applied by the downstream compressor. More in general, based on the knowledge of the characteristics of a downstream compressor or of a type or class of downstream compressor, it is possible to create an association between the results of the analysis and correction factors to be applied to the starting image, for example also where the transform of the quantisation coefficients used in step S200' are not exactly the same as the ones used downstream by the compressor. Such examples demonstrate, therefore, that it is possible to determine the correction factor from the analysis of the images A and A' in a variety of ways, both empirical and non-empirical.

In other words, applying the correction factor comprises modifying at least a part of the frame so that at least a part of the corrected frame is not removed by a subsequent encoding step. For example, the modifying comprises at least one between amplifying at least some of the frequencies of said at least a part of said frame, increasing a level of noise (for example increasing the film granularity) of said at least a part of said frame, and increasing the sharpness of said at least a part of said frame. Preferably, the sharpness is increased in a part of the frame that represents edges of an image or part of an image, and/or of a part of the frame which represents a transition between one or more images. Reference is also made to the examples illustrated below, also with reference to the figures.

In yet other words, it can be said that the starting frame is modified so as to introduce, into the corrected frame, modifications (corresponding to the correction factor) such that an encoding step downstream produces non-null components in the modified parts relative to the starting frame.

Based on what was described above, it follows that (making reference, for example, to the first embodiment, but the same applies for the other embodiments and examples) the method described above can output an analysis index; in such a case, the step of determining (S300) a correction factor on the basis of the analysis (S300) comprises determining a correction factor corresponding to the analysis index, wherein the correction factor and the analysis index are associated with each other so that a correction factor generates the corrected frame with at least one of the amplified frequency components.

More in general, it is possible to have a plurality of correction factors and a plurality of analysis indexes associated with each other, so that a correction factor associated with the respective analysis index generates the corrected frame with at least one of the amplified frequency components, and wherein the correction index is associated with the analysis index in consideration of the fact that the analysis index indicates to what degree the processing removes said at least one of the frequency components. This association can be empirical, or based on knowledge of the processing. In the latter case, if the processing applied so as to obtain the second image is the same as the processing of the encoder, it will be possible to more accurately determine a correction factor that compensates for the deletions introduced by the encoder. As said, this is not strictly necessary, since in general a correction index can be associated with an analysis index based on the type of processing applied to the starting image (which will thus be an approximation of the processing of the encoder downstream).

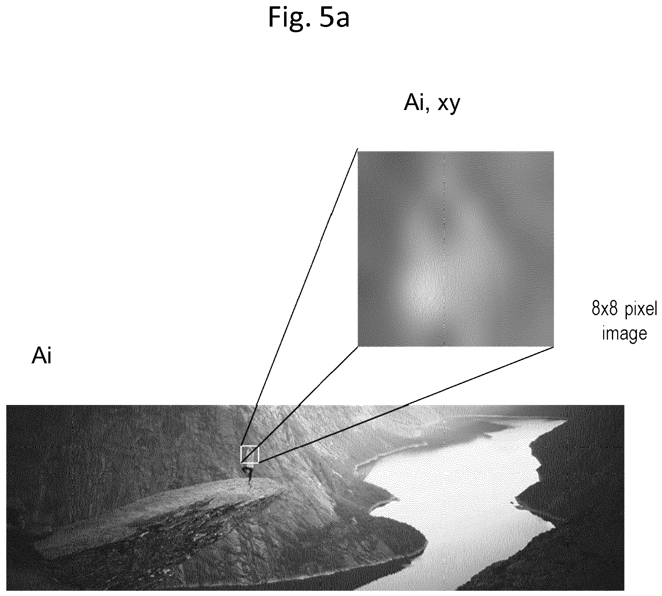

A non-limiting example of how the steps related to the first processing can be implemented will be described below. With reference to figure 5a, let us consider, for example, the image Ai representing, for example, an i-th frame of a video signal. Within this image, let us then consider an 8x8 pixel block referred to as Ai,xy, where xy indicates the position of the block of the image. A transform DCT will be applied to this block so as to obtain as a result the following matrix representing the aforesaid

$$DCT(Ai, xy) = \begin{vmatrix} 7756 & 211 & 456 & 381 & 345 & 104 & 33 & 19 \\ 198 & 149 & 178 & 257 & 64 & 39 & 15 & 6 \\ 156 & 297 & 215 & 89 & 142 & 90 & 123 & 11 \\ 113 & 134 & 159 & 117 & 57 & 69 & 78 & 6 \\ 48 & 95 & 237 & 286 & 60 & 129 & 97 & 18 \\ 64 & 146 & 62 & 43 & 48 & 19 & 2 & 1 \\ 37 & 124 & 63 & 27 & 31 & 5 & 0 & 1 \\ 24 & 27 & 5 & 33 & 29 & 51 & 48 & 89 \end{vmatrix} \quad (1)$$

block:

The matrix thus obtained, which we shall indicate as DCT (Ai,xy) (or more briefly also as $DCT_A$) will be divided in the matrix sense by the quantisation matrix QM so as to obtain a matrix of quantised coefficients QC, i.e.:

$$(2a)$$

$$DCT(Ai, xy)/QM = QC$$

(2b)

| 7756 | 211 | 456 | 381 | 345 | 104 | 33 | 19 |
|---|---|---|---|---|---|---|---|
| 198 | 149 | 178 | 257 | 64 | 39 | 15 | 6 |
| 156 | 297 | 215 | 89 | 142 | 90 | 123 | 11 |
| 113 | 134 | 159 | 117 | 57 | 69 | 78 | 6 |
| 48 | 95 | 237 | 286 | 60 | 129 | 97 | 18 |
| 64 | 146 | 62 | 43 | 48 | 19 | 2 | 1 |
| 37 | 124 | 63 | 27 | 31 | 5 | 0 | 1 |
| 24 | 27 | 5 | 33 | 29 | 51 | 48 | 89 |

/

| 8 | 16 | 19 | 22 | 26 | 27 | 29 | 34 |
|---|---|---|---|---|---|---|---|
| 16 | 16 | 22 | 24 | 27 | 29 | 34 | 37 |
| 19 | 22 | 26 | 27 | 29 | 34 | 34 | 38 |
| 22 | 22 | 26 | 27 | 29 | 34 | 37 | 40 |
| 22 | 26 | 27 | 29 | 32 | 35 | 40 | 48 |
| 26 | 27 | 29 | 32 | 35 | 40 | 48 | 58 |
| 26 | 27 | 29 | 34 | 38 | 48 | 56 | 69 |
| 27 | 29 | 35 | 38 | 46 | 56 | 69 | 83 |

=

| 970 | 13 | 24 | 17 | 13 | 4 | 1 | 1 |
|---|---|---|---|---|---|---|---|
| 12 | 9 | 8 | 11 | 2 | 1 | 0 | 0 |
| 8 | 14 | 8 | 3 | 5 | 3 | 4 | 0 |
| 5 | 6 | 6 | 4 | 2 | 2 | 2 | 0 |
| 2 | 4 | 9 | 10 | 2 | 4 | 2 | 0 |
| 2 | 5 | 2 | 1 | 1 | 0 | 0 | 0 |
| 1 | 5 | 2 | 1 | 1 | 0 | 0 | 0 |
| 1 | 1 | 0 | 1 | 1 | 1 | 1 | 1 |

In (2b), the matrix coefficients QM are selected on the basis of coefficients typically used in conventional compressors. Different values can be selected. At this point, the matrix of quantised coefficients QC can be divided by a scale value (QSC) so as to obtain a compressed matrix DCT (CDM) :

(3a)

$$QC/QSC = CDM$$

(3b)

| 970 | 13 | 24 | 17 | 13 | 4 | 1 | 1 |
|---|---|---|---|---|---|---|---|
| 12 | 9 | 8 | 11 | 2 | 1 | 0 | 0 |
| 8 | 14 | 8 | 3 | 5 | 3 | 4 | 0 |
| 5 | 6 | 6 | 4 | 2 | 2 | 2 | 0 |
| 2 | 4 | 9 | 10 | 2 | 4 | 2 | 0 |
| 2 | 5 | 2 | 1 | 1 | 0 | 0 | 0 |
| 1 | 5 | 2 | 1 | 1 | 0 | 0 | 0 |
| 1 | 1 | 0 | 1 | 1 | 1 | 1 | 1 |

/ 8 =

| 121 | 2 | 3 | 2 | 2 | 1 | 0 | 0 |
|---|---|---|---|---|---|---|---|
| 2 | 1 | 1 | 1 | 0 | 0 | 0 | 0 |
| 1 | 2 | 1 | 0 | 1 | 0 | 1 | 0 |
| 1 | 1 | 1 | 1 | 0 | 0 | 0 | 0 |
| 0 | 1 | 1 | 1 | 0 | 1 | 0 | 0 |
| 0 | 1 | 0 | 0 | 0 | 0 | 0 | 0 |
| 0 | 1 | 0 | 0 | 0 | 0 | 0 | 0 |
| 0 | 0 | 0 | 0 | 0 | 0 | 0 | 0 |

In the above example (3b), the scale value is a scalar value obtained, for example, from the following table (4) at a non-linear value of the code 8 (wherein the code value can be the one used by the downstream compressor, but not necessarily):

(4)

| CODE | LINEAR QUANT SCALE | NON-LINEAR QUANT SCALE |
|---|---|---|
| 1 | 2 | 1 |
| 8 | 16 | (8) |
| 16 | 32 | 24 |
| 20 | 40 | 40 |
| 24 | 48 | 56 |
| 28 | 56 | 88 |
| 31 | 62 | 112 |

Other values, other tables or other scale factors, also matrix scale factors, can be used. The steps mathematically described above in (1), (2a) and (3a) are examples of the processing S200 or S200' described above.

At this point, the same quantised scale value QSC described above is applied to the compressed matrix of value DCT CDM so as to obtain an inverse transform DCT:

(5a)

$$CDM * QSC = DCT^R$$

(5b)

From the example one immediately notes that, as a result of the previous operations, namely, the quantisation and application of the scale ratio, the result $DCT^R$ of the inverse transform DCT is a different matrix from the starting matrix DCT(Ai,xy).

At this point, it is possible to obtain a compression error matrix (CEM) as a function of the input coefficients DCT, i.e. of the corresponding matrix DCT (Ai, xy), and of the inverse matrix coefficients DCT ($DCT^R$):

$$(6a) \qquad CEM = f \; (DCT(A_{i,xy}) \; , \; DCT^R)$$

A direct way to implement this function consists simply in subtracting, element by element, the starting matrix coefficients DCT and the inverse matrix coefficients DCT, for example as follows:

(6b)

| 7756 | 211 | 456 | 381 | 345 | 104 | 33 | 19 |
|---|---|---|---|---|---|---|---|
| 198 | 149 | 178 | 257 | 64 | 39 | 15 | 6 |
| 156 | 297 | 215 | 89 | 142 | 90 | 123 | 11 |
| 113 | 134 | 159 | 117 | 57 | 69 | 78 | 6 |
| 48 | 95 | 237 | 286 | 60 | 129 | 97 | 18 |
| 64 | 146 | 62 | 43 | 48 | 19 | 2 | 1 |
| 37 | 124 | 63 | 27 | 31 | 5 | 0 | 1 |
| 24 | 27 | 5 | 33 | 29 | 51 | 48 | 89 |

−

| 7744 | 256 | 456 | 352 | 416 | 216 | 0 | 0 |
|---|---|---|---|---|---|---|---|
| 256 | 128 | 176 | 192 | 0 | 0 | 0 | 0 |
| 152 | 352 | 208 | 0 | 232 | 0 | 272 | 0 |
| 176 | 176 | 208 | 216 | 0 | 0 | 0 | 0 |
| 0 | 208 | 216 | 232 | 0 | 280 | 0 | 0 |
| 0 | 216 | 0 | 0 | 0 | 0 | 0 | 0 |
| 0 | 216 | 0 | 0 | 0 | 0 | 0 | 0 |
| 0 | 0 | 0 | 0 | 0 | 0 | 0 | 0 |

=

| 12 | -45 | 0 | 29 | -71 | -112 | 33 | 19 |
|---|---|---|---|---|---|---|---|
| -58 | 21 | 2 | 65 | 64 | 39 | 15 | 6 |
| 4 | -55 | 7 | 89 | -90 | 90 | -149 | 11 |
| -63 | -42 | -49 | -99 | 57 | 69 | 78 | 6 |
| 48 | -113 | 21 | 54 | 60 | -151 | 97 | 18 |
| 64 | -70 | 62 | 43 | 48 | 19 | 2 | 1 |
| 37 | -92 | 63 | 27 | 31 | 5 | 0 | 1 |
| 24 | 27 | 5 | 33 | 29 | 51 | 48 | 89 |

The above equations (6a) or (6b) represent an example of the step of analysing on the basis of the image A and image A'. The matrix CEM represents an example of the result of the analysis, or of an analysis index in matrix form. It is possible, but not necessary, to apply a function to the matrix CEM in order to obtain, for example, a scalar value representative of the analysis index.

As mentioned, though on one the hand the matrix CEM can be considered an analysis index in matrix form, it is also possible to obtain an index in scalar form, and the index itself can be further refined. For example, it is possible to scale the index CEM by multiplying it by a suitable weights matrix, or by a scalar weight value, thus obtaining the scaled compression matrix CEM'. In the example discussed here, regarding the correction of high frequencies, a matrix of high frequency weights (HFW) can be used):

(7a)

$$CEM' = f(CEM, HFW)$$

In a more specific example:

(7b)

| 12 | -45 | 0 | 29 | -71 | -112 | 33 | 19 |
|---|---|---|---|---|---|---|---|
| -58 | 21 | 2 | 65 | 64 | 39 | 15 | 6 |
| 4 | -55 | 7 | 89 | -90 | 90 | -149 | 11 |
| -63 | -42 | -49 | -99 | 57 | 69 | 78 | 6 |
| 48 | -113 | 21 | 54 | 60 | -151 | 97 | 18 |
| 64 | -70 | 62 | 43 | 48 | 19 | 2 | 1 |
| 37 | -92 | 63 | 27 | 31 | 5 | 0 | 1 |
| 24 | 27 | 5 | 33 | 29 | 51 | 48 | 89 |

*

| 0 | 0 | 0 | 0 | 0 | 0 | 0 | 0 |
|---|---|---|---|---|---|---|---|
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 1 | 2 | 3 | 4 |
| 0 | 0 | 0 | 0 | 2 | 4 | 6 | 8 |
| 0 | 0 | 0 | 0 | 3 | 6 | 9 | 12 |
| 0 | 0 | 0 | 0 | 4 | 8 | 12 | 16 |

=

| 0 | 0 | 0 | 0 | 0 | 0 | 0 | 0 |
|---|---|---|---|---|---|---|---|
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 60 | -302 | 291 | 72 |
| 0 | 0 | 0 | 0 | 96 | 76 | 12 | 8 |
| 0 | 0 | 0 | 0 | 93 | 30 | 0 | 12 |
| 0 | 0 | 0 | 0 | 116 | 408 | 576 | 1424 |

wherein the first member and second member on the left represent respectively CEM and HFW, and the part on the right represents the corrected index CEM'. In the example, the weights matrix HFW has the function of isolating some of the high frequencies on which the filter intends to operate, i.e. the values on the basis of which the correction factor will be determined.

The matrix HFW in the formula (7b) can be, for example, obtained empirically (by carrying out a series of tests on different values and verifying the quality produced by the process described), or on the basis of knowledge of the transform and/or quantisation processes used in general by compressors or by the specific compressor used downstream.

As mentioned, a further function can be applied to the compression error matrix CEM, for example in order to obtain a scalar value. An immediate example of this function consists in adding up all the elements of the matrix, or at least a part of them. If, for example, all the elements of the matrix CEM are added up, a value of 2972 is obtained, which thus represents the error at high frequencies, or a scalar example of the analysis index relating to the analysis of high frequencies.

Starting from this value in scalar form, it is possible, for example, to determine a correction factor to be applied to the starting image A; for example, by dividing 2972 by the number of non-null values of the matrix, one can obtain a scalar value of average correction; alternatively, one can apply a formula or a transfer function to the value obtained from the matrix CEM so as to obtain the correction factor; the transfer function can be determined empirically or on the basis of knowledge about conventional encoders or the downstream encoder. The expressions 7(a) and 7(b) represent examples of the step of determining a correction factor on the basis of the result of the analysis.

This correction factor, be it a scalar or matrix value, can then be applied to the starting 8x8 pixel block (Ai,xy) so as to obtain a corrected image A'' and hence a corrected frame F'' containing said image.

The above operations can be repeated for several blocks, or for all of the blocks of the starting image A. In particular, for each block of the starting image A, a respective correction factor to be applied can be identified. Alternatively, it is conceivable to determine an average value of the various correction factors as the value to be applied to the whole frame, or an average value of the correction factor CF to be applied to a certain set of blocks of the starting image A. The corrected image will then be input to the encoder, which - thanks to the properties of the pre-distorted frame - will be able to produce a video signal having an improved quality/bitrate ratio compared to conventional techniques. In fact, the compressor will not remove all the high frequency components, since the correction made ensures that these components do not fall within the conditions otherwise provided for by the encoder to disregard such components. In other words, starting, for example, from the compression error matrix CEM, it is possible to derive a value to be applied to the starting image so that the high frequency components are corrected so that they will not be completely removed by the downstream compressor. This results in an improvement in the quality perceived by the end user.

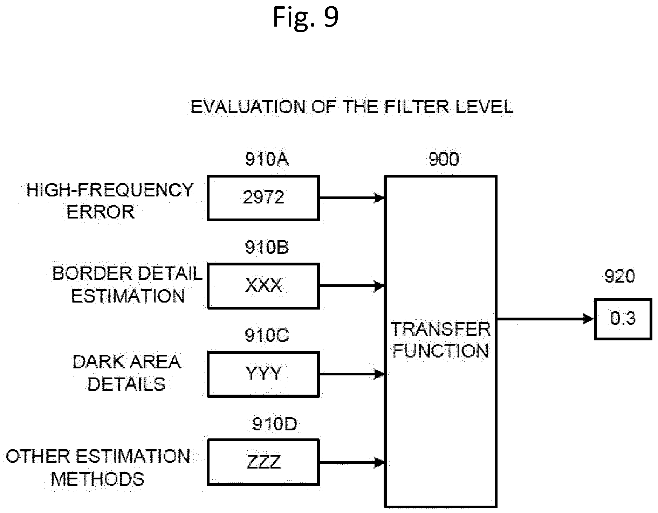

An example in which a first processing and an analysis are applied to determine a high frequency error has been described above. However, the method can be applied with other types of processing and analysis, for example to determine an estimate of the edge details, or an estimate or indication of the dark areas, as well as take into account other estimation methods used in the initial compression steps in order for the encoder to determine which parameters to work on so as to obtain a certain ratio between quality and compression. It is noted, moreover, that the various methods of estimation or analysis listed above can also be combined together and appropriately weighted within a transfer function which thus produces the correction factor CF to be applied to a single block and/or the whole starting image A. See also figure 9 representing a transfer function, into which the values representing respective analysis indexes are input, and which outputs a value of the correction factor to be applied to the whole starting frame. In the example, the correction value is scalar, but it is also possible to obtain a matrix correction factor. The transfer function, obtainable, as said, either empirically or on the basis of the knowledge mentioned above, can for example have a polynomial form with respective weight coefficients. In general, any function is utilisable.

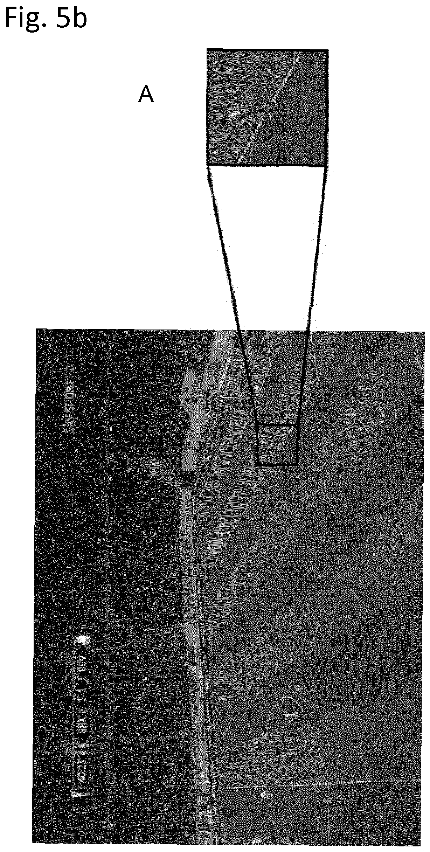

Another example will now be described, starting from figure 5b, in which a still image of a football match is shown. The still image thus represents an example of the starting image A, from which a sub-image is extracted as shown in the box in the figure. For the sake of simplicity, let us assume that the sub-image can be described by an 8 pixel x 8 pixel block (for illustrative purposes).

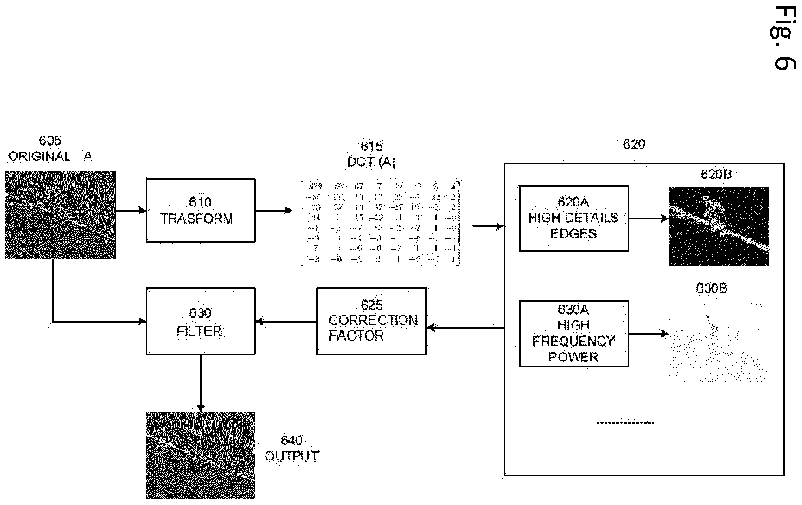

With reference to figure 6, the original image A in figure 5(b), that is, the part extracted from the original frame, is subjected to a transform operation DCT so as to obtain a matrix representation which we shall indicate as DCT(A), and which thus represents the image subjected to the first processing. Said processed image is analysed, for example in order to identify the edges of the finest details (high detail edges analysis), as can be seen in 620B of figure 6, which shows how the starting image quantised and subjected to the analysis of the block 620A would appear. As may be inferred from the figure, it is possible to analyse the degradation introduced by the processing; see in particular the parts characterised by corners or edges as present in the image. In the block 630A, by contrast, the powers at high frequencies are analysed; the image 630B shows how the starting image A would appear when it is subjected to quantisation and the power and high frequency analysis. It should be noted that the images 620B and 630B are provided for illustrative purposes and in fact it is not necessary to render them visible as in the figure. The result of the analysis 620A and 630B is then input to a block 625 which determines a correction factor by suitably weighting, for example, the results of each of the analyses 620A and 630A. In block 630 the correction factor is applied to the original image A 605 so as to obtain, as output, the image 640, which can in turn be input to a downstream compressor. The downstream compressor will receive the pre-distorted image 640 exactly in the same manner in which it would receive the original image A 605. In other words, the operation, design and configuration of the downstream compressor are not affected (downstream compressor or downstream encoder are interchangeable terms herein). In the above example, the operations performed in the blocks 610 and 630 represent different types of processes included in the first processing (in other words, they represent examples of the steps S200 or S200'). The blocks 620A and 630A represent examples of different steps of analysis that can be used to determine the correction factor. Further types of analysis can be used in addition to the ones schematised in 620A and 630B, whose result contributes to determining the CF. Moreover, the block 630, in which the correction factor is applied to the original image, is also called filter since it enables the starting image A to be pre-distorted, based on what was said above. Each block is only illustrative, and can be constructed in any HW and/or SW combination, locally on a device or distributed over a number of devices.

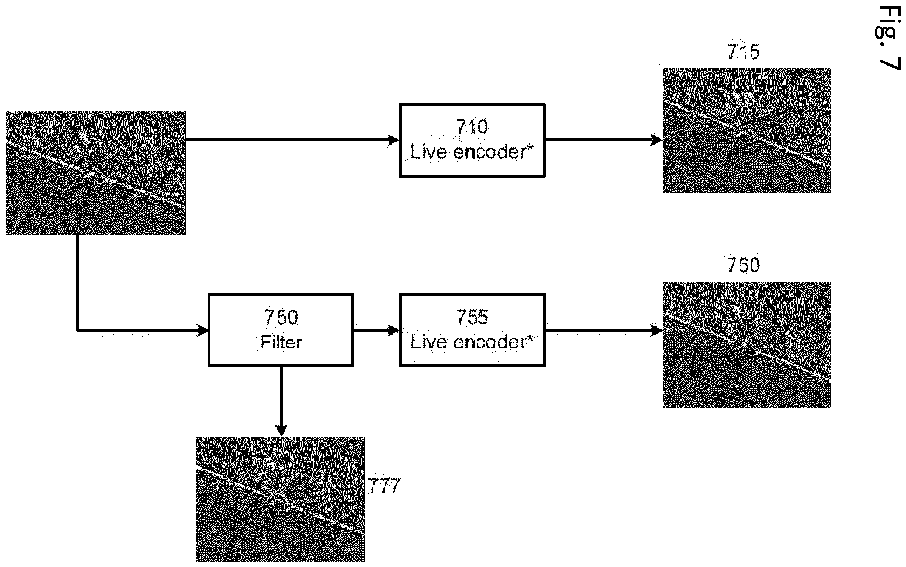

Figure 7 thus illustrates the difference between the operation according to the invention and the operation according to the prior art. In particular, in a conventional solution, the starting image 700 is directly input to the encoder 710 (in this example, a live encoder), which will output an image 715 without a filter, i.e. without pre-distortion. Because of the characteristics of the encoder 710, imperfections or degradations will be present in the image 715, which will be perceived by the end user as an image of poor quality. This occurs because the encoder will delete some components.

According to the invention, by contrast, a filter 750 is applied, i.e. a correction factor determined as described above, which will then produce a pre-distorted image 777. This pre-distorted image is input to the encoder 755, which will then produce an output image 760. Even if the encoder 755 were identical to the encoder 710, the output image 760 would be different from the output image 715 thanks to the presence of the filter 750 and the pre-distortion introduced by it. As explained earlier, the filter 750 introduces a correction factor which serves to modify, and preferably to compensate for or eliminate, the errors or degradations introduced by the encoder which would be perceived by the user as a degradation of quality. Therefore, the image 760, yielded by the same encoder, has a quality perceived by the end user to be superior to the conventional case.

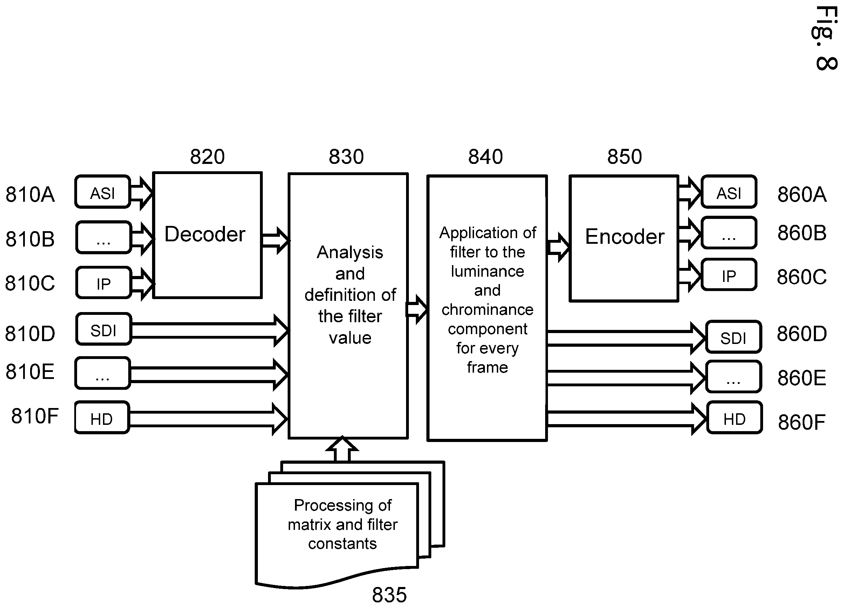

Figure 8 represents a block diagram of a system according to an example of the present invention. In the unit 830, an analysis is performed and the value of filter is defined on the basis of at least one input frame, wherein said frame comprises at least one image. The frame or video signal can be input to the unit of analysis 830 in non-compressed form, for example in the SDI or HD-SDI format, as received, for example, from a respective database 810D or 810F, or as received through a respective communication line 810D or 810F. If, by contrast, the starting video signal is in an already compressed format, it is possible to input it to a decoder 820, which will convert it into a non-compressed format in order then to input it to the unit of analysis 830. Examples of compressed formats are ASI (810A) and IP (810C). Other compressed and/or non-compressed formats can be used as indicated by the blocks 810B and 810E. The unit of analysis 830 can use matrix and filter constants, for example containing weight coefficients, as also illustrated below, which can be provided by the unit 835 for processing the filter matrix constants. The unit of analysis 830 can be also called unit of analysis and definition of the filter value, as it can output a correction index factor, or directly a value of the correction factor to be applied, for example by means of the filter application unit 840, to at least a part of the starting image contained in the initial video signal. In one example, the filter application unit 840 can apply the correction factor to the luminance and/or chrominance components for each of the frames for which the correction factor has been determined. The unit 840 will then output at least one corrected frame, and preferably the video signal comprising one or more corrected frames. The corrected signal can then be input to an encoder 850 which will produce an output signal, for example in the ASI 860A or IP 860C format, though other formats 860B are possible. Alternatively, the unit 840 will output the frame or corrected signal in a non-compressed format, for example SD 860D, HD-SDI 860F or other formats 860E, which can then be sent, for example, to another encoder in order for them to be compressed.

Figure 9, by contrast, illustrates a block diagram of a transfer function 900, which can for example be implemented according to one of the examples illustrated above. In particular, the transfer function 900 can be input with one or more indexes of the result of a respective analysis. Represented as an example in the figure is an input 910A relative to an index of an analysis of high-frequency error, which in the example has a value of 2972 as illustrated above; an input 810B relative to an analysis index of the edge detail estimation (*border detail estimation*), represented in the figure by the value XXX; an input 910C relative to an analysis index of dark area details (having the value YYY). Other indexes relating to respective estimation methods 910D can be input. The transfer function then outputs a value 920 which represents a value of the correction factor to be applied to the frame. In the example, the correction factor is of the scalar type and has a value of 0.3. As said, the transfer function can be of any form, for example polynomial, in which each input index 910A-D is weighted by a respective weight coefficient, and (each input) associated with a respective polynomial term having a respective power index. In one example, the transfer function 900 can be implemented inside the unit 830, though it could likewise be implemented in the unit 840 or in other units.

What was described above with reference to a method is applied in a corresponding manner to an entity, computer program, medium for the instructions of a computer program, and system, and vice-versa.

Naturally, the above description of embodiments and examples applying the principles recognised by the inventors is given solely for the purpose of exemplifying such principles and must therefore not be construed as a limitation of the invention or of the teachings set forth herein or which may be derived by the person skilled in the art.

**Claims**

1.  A method for processing a video signal, said video signal comprising at least one frame comprising a first image, the method comprising the steps of:

    - performing (S200) a processing on said first image (A) to obtain a second image (A') corresponding to said first image (A);
    - determining (S300) a correction factor on the basis of an analysis (S300) of said second image (A') in relation to said first image (A);
    - applying (S400) said correction factor to at least a part of said frame (A) to obtain a corrected frame (A'');
    - performing (S600) a compression by means of a live encoder on said corrected frame (A"), the compression including a transform coding and a quantisation process,

    wherein said processing (S200) comprises said transform coding, said quantisation process, a corresponding de-quantisation process and an inverse transforming coding, and wherein the processing does not include other steps included in the compression.

2.  The method according to claim 1, wherein said analysis of said second image (A') relative to said first image (A) provides an analytical index indicative of a level of degradation introduced by the processing into the second image relative to the first image.

3.  The method according to any one of the preceding claims, wherein the correction factor is a factor to be applied to the first image in order to modify at least in part the degradation introduced by the processing.

4.  The method according to any one of the preceding claims, wherein said transform coding comprises at least one between a discrete cosine transform and a wavelet transform.

5.  The method according to any one of the preceding claims, wherein the analysis comprises a pixel-by-pixel comparison of at least one set of respective pixels of said first image and of said second image.

6.  The method according to any one of the preceding claims, wherein the analysis comprises at least one among: an analysis of the high-frequency errors introduced by said processing, an analysis of the estimation of edge and/or contrast details in the first image and an estimation on the details of dark areas in the first image.

7.  The method according to any one of the preceding claims, wherein applying (S400) said correction factor comprises modifying at least a part of said frame (A) in order to introduce into the corrected frame modifications corresponding to the correction factor and such that an encoding step performed downstream on the corrected frame produces non-null encoded components in said at least a modified part of the frame.

8.  The method according to any one of the preceding claims, wherein said analysis outputs an analytical index, wherein determining (S300) a correction factor on the basis of said analysis (S300) comprises determining a correction factor corresponding to the analytical index, and wherein the correction factor and the analytical index are associated with each other so that a correction factor generates the corrected frame with at least one of the amplified frequency components.

9.  An entity (400) for processing a video signal, said video signal comprising at least one frame comprising a first image, the entity comprising:

    - a processing means (420) configured to perform a processing on said first image (A) so as to obtain a second image (A') corresponding to said first image (A);
    - a determination means (430) configured to determine a correction factor (CF) on the basis of an analysis of said second image (A') relative to said first image (A);
    - correction means (440) configured to apply said correction factor to at least a part of said frame (A), thereby obtaining a corrected frame (A'');
    - means for performing a compression by means of a live encoder on said corrected frame (A"), the compression including a transform coding and a quantisation process;

       wherein said processing comprises said transform coding, said quantisation process, a corresponding de-quantisation process and an inverse transform coding, and
wherein the processing does not include other steps included in the compression.

10. The entity according to claim 9, wherein said analysis of said second image (A') relative to said first image (A) provides an analytical index indicative of a level of degradation introduced by the processing into the second image relative to the first image.

11. The entity according to any one of claims 9 and 10, wherein the correction factor is a factor to be applied to the first image in order to modify at least in part the degradation introduced by the processing.

12. A computer program containing instructions configured to execute, when said program is run on a computer, the steps according to one or more of claims 1 to 8.

13. A system for processing a video signal, said video signal comprising at least one frame comprising a first image, said system comprising an entity according to any of claims 9 to 11.

**Patentansprüche**

1. Ein Verfahren zur Verarbeitung eines Videosignals, wobei das Videosignal mindestens ein Einzelbild umfasst, das ein erstes Bild enthält, wobei das Verfahren die folgenden Schritte umfasst:

   - Durchführen (S200) einer Verarbeitung des ersten Bildes (A), um ein zweites Bild (A') zu erhalten, das dem ersten Bild (A) entspricht;
   - Bestimmen (S300) eines Korrekturfaktors auf der Grundlage einer Analyse (S300) des zweiten Bildes (A') in Bezug auf das erste Bild (A);
   - Anwenden (S400) des Korrekturfaktors auf mindestens einen Teil des Einzelbilds (A), um ein korrigiertes Einzelbild (A'') zu erhalten;
   - Durchführen (S600) einer Komprimierung mittels eines Live-Codierers an dem korrigierten Einzelbild (A''), wobei die Komprimierung eine Transformationscodierung und einen Quantisierungsprozess umfasst,

   wobei die Verarbeitung (S200) die Transformationscodierung, den Quantisierungsprozess, einen entsprechenden De-Quantisierungsprozess und eine inverse Transformationscodierung umfasst, und wobei die Verarbeitung keine anderen Schritte umfasst, die in der Komprimierung enthalten sind.

2. Das Verfahren nach Anspruch 1, wobei die Analyse des zweiten Bildes (A') in Bezug auf das erste Bild (A) einen analytischen Index liefert, der einen Grad der Verschlechterung anzeigt, der durch die Verarbeitung in das zweite Bild in Bezug auf das erste Bild eingeführt wurde.

3. Das Verfahren nach einem der vorhergehenden Ansprüche, wobei der Korrekturfaktor ein Faktor ist, der auf das erste Bild anzuwenden ist, um die durch die Verarbeitung eingeführte Verschlechterung zumindest teilweise zu modifizieren.

4. Das Verfahren nach einem der vorangehenden Ansprüche, wobei die Transformationscodierung mindestens eine der beiden folgenden Transformationen umfasst: eine diskrete Kosinustransformation und eine Wavelet-Transformation.

5. Das Verfahren nach einem der vorhergehenden Ansprüche, wobei die Analyse einen Pixel-für-Pixel-Vergleich von mindestens einem Satz von jeweiligen Pixeln des ersten Bildes und des zweiten Bildes umfasst.

6. Das Verfahren nach einem der vorhergehenden Ansprüche, wobei die Analyse mindestens eines der folgenden Elemente umfasst: eine Analyse der durch die Verarbeitung eingeführten Hochfrequenzfehler, eine Analyse der Schätzung von Kanten- und/oder Kontrastdetails im ersten Bild und eine Schätzung der Details von dunklen Bereichen im ersten Bild.

7. Das Verfahren nach einem der vorhergehenden Ansprüche, wobei das Anwenden (S400) des Korrekturfaktors das Modifizieren mindestens eines Teils des Einzelbilds (A) umfasst, um in dem korrigierten Einzelbild Modifikationen einzuführen, die dem Korrekturfaktor entsprechen, und zwar so, dass ein Codierungsschritt, der stromabwärts auf das korrigierte Einzelbild ausgeführt wird, nicht-null-codierte Komponenten in dem mindestens modifizierten Teil des Einzelbilds erzeugt.

8. Das Verfahren nach einem der vorhergehenden Ansprüche, wobei die Analyse einen analytischen Index ausgibt, wobei das Bestimmen (S300) eines Korrekturfaktors auf der Grundlage der Analyse (S300) das Bestimmen eines Korrekturfaktors umfasst, der dem analytischen Index entspricht, und wobei der Korrekturfaktor und der analytische Index einander zugeordnet sind, so dass ein Korrekturfaktor das korrigierte Einzelbild mit mindestens einer der verstärkten Frequenzkomponenten erzeugt.

9. Eine Einheit (400) zum Verarbeiten eines Videosignals, wobei das Videosignal mindestens ein Einzelbild umfasst, das ein erstes Bild enthält, wobei die Einheit umfasst:

   - ein Verarbeitungsmittel (420), das konfiguriert ist, eine Verarbeitung des ersten Bildes (A) durchzuführen, um ein zweites Bild (A') zu erhalten, das dem ersten Bild (A) entspricht;
   - ein Bestimmungsmittel (430), das konfiguriert ist, einen Korrekturfaktor (CF) auf der Grundlage einer Analyse des zweiten Bildes (A') relativ zu dem ersten Bild (A) zu bestimmen;
   - eine Korrektureinrichtung (440), die konfiguriert ist, den Korrekturfaktor auf zumindest einen Teil des Einzelbilds (A) anzuwenden, wodurch ein korrigiertes Einzelbild (A'') erhalten wird;
   - Mittel zum Durchführen einer Kompression mittels eines Live-Codierers an dem korrigierten Einzelbild (A''), wobei die Kompression eine Transformationscodierung und einen Quantisierungsprozess umfasst;
   wobei die Verarbeitung die Transformationscodierung, den Quantisierungsprozess, einen entsprechenden De-Quantisierungsprozess und eine inverse Transformationscodierung umfasst, und
   wobei die Verarbeitung keine anderen Schritte umfasst, die in der Kompression enthalten sind.

10. Die Einheit nach Anspruch 9, wobei die Analyse des zweiten Bildes (A') in Bezug auf das erste Bild (A) einen analytischen Index liefert, der einen Grad der durch die Verarbeitung in das zweite Bild eingeführten Verschlechterung in Bezug auf das erste Bild anzeigt.

11. Die Einheit nach einem der Ansprüche 9 und 10, wobei der Korrekturfaktor ein Faktor ist, der auf das erste Bild anzuwenden ist, um die durch die Verarbeitung eingeführte Verschlechterung zumindest teilweise zu modifizieren.

12. Ein Computerprogramm, das Anweisungen enthält, die so konfiguriert sind, dass sie, wenn das Programm auf einem Computer ausgeführt wird, die Schritte nach einem oder mehreren der Ansprüche 1 bis 8 ausführen.

13. Ein System zur Verarbeitung eines Videosignals, wobei das Videosignal mindestens ein Einzelbild mit einem ersten Bild umfasst und das System eine Einheit nach einem der Ansprüche 9 bis 11 umfasst.

**Revendications**

1. Procédé de traitement d'un signal vidéo, ledit signal vidéo comprenant au moins une trame comprenant une première image, le procédé comprenant les étapes de :

   - effectuer (S200) un traitement sur ladite première image (A) pour obtenir une deuxième image (A') correspondante à ladite première image (A) ;
   - déterminer (S300) un facteur de correction sur la base d'une analyse (S300) de ladite seconde image (A') par rapport à ladite première image (A) ;
   - appliquer (S400) ledit facteur de correction à au moins une partie de ladite trame (A) pour obtenir une trame corrigée (A'') ;
   - effectuer (S600) une compression au moyen d'un codeur en direct sur ladite trame corrigée (A''), la compression comprenant un codage de transformation et un processus de quantification,

   dans lequel ledit traitement (S200) comprend ledit codage de transformation, ledit processus de quantification, un processus de dé-quantification correspondant et un codage de transformation inverse, et dans lequel le traitement ne comprend pas d'autres étapes incluses dans la compression.

2. Procédé selon la revendication 1, dans lequel l'analyse de ladite deuxième image (A') par rapport à la première image (A) fournit un indice analytique indiquant un niveau de dégradation introduit par le traitement dans la deuxième image par rapport à la première image.

3. Procédé selon l'une quelconque des revendications précédentes, dans lequel le facteur de correction est un facteur à appliquer à la première image afin de modifier au moins en partie la dégradation introduite par le traitement.

4. Méthode selon l'une des revendications précédentes, dans laquelle le codage de transformation comprend au moins une entre une transformée en cosinus discrète et une transformée en ondelettes.

5. Procédé selon l'une quelconque des revendications précédentes, dans lequel l'analyse comprend une comparaison pixel par pixel d'au moins un ensemble de pixels respectifs de la première image et de la seconde image.

6. La méthode selon l'une quelconque des revendications précédentes, dans laquelle l'analyse comprend au moins l'un des éléments suivants : une analyse d'erreurs à haute fréquence introduites par ledit traitement, une analyse de l'estimation de bords et/ou du contraste dans la première image et une estimation des détails des zones sombres dans la première image.

7. Le procédé selon l'une quelconque des revendications précédentes, dans lequel l'application (S400) dudit facteur de correction comprend la modification d'au moins une partie de ladite trame (A) afin d'introduire dans la trame corrigée des modifications correspondantes au facteur de correction et telles qu'une étape de codage effectuée en aval sur la trame corrigée produise des composantes codées non nulles dans ladite au moins une partie modifiée de la trame.

8. Le procédé selon l'une quelconque des revendications précédentes, dans lequel ladite analyse produit un indice analytique, dans lequel la détermination (S300) d'un facteur de correction sur la base de ladite analyse (S300) comprend la détermination d'un facteur de correction correspondant à l'indice analytique, et dans lequel le facteur de correction et l'indice analytique sont associés l'un à l'autre de sorte qu'un facteur de correction génère la trame corrigée avec au moins l'une des composantes de fréquence amplifiées.

9. Entité (400) de traitement d'un signal vidéo, ledit signal vidéo comprenant au moins une trame comprenant une première image, l'entité comprenant :

   - un moyen de traitement (420) configuré pour effectuer un traitement sur ladite première image (A) afin d'obtenir une deuxième image (A') correspondante à ladite première image (A) ;
   - un moyen de détermination (430) configuré pour déterminer un facteur de correction (CF) sur la base d'une analyse de ladite seconde image (A') par rapport à ladite première image (A) ;
   - un moyen de correction (440) configuré pour appliquer ledit facteur de correction à au moins une partie de ladite trame (A), obtenant ainsi une trame corrigée (A'') ;
   - des moyens pour effectuer une compression au moyen d'un codeur en direct sur ladite trame corrigée (A''), la compression comprenant un codage de transformation et un processus de quantification ;

   dans lequel ledit traitement comprend ledit codage de transformation, ledit processus de quantification, un processus de dé-quantification correspondant et un codage de transformation inverse, et dans lequel le traitement ne comprend pas d'autres étapes incluses dans la compression.

10. L'entité selon la revendication 9, dans laquelle l'analyse de la deuxième image (A') par rapport à la première image (A) fournit un indice analytique indiquant un niveau de dégradation introduit par le traitement dans la deuxième image par rapport à la première image.

11. L'entité selon l'une quelconque des revendications 9 et 10, dans laquelle le facteur de correction est un facteur à appliquer à la première image afin de modifier au moins en partie la dégradation introduite par le traitement.

12. Programme d'ordinateur contenant des instructions configurées pour exécuter, lorsque ledit programme est exécuté sur un ordinateur, les étapes selon une ou plusieurs des revendications 1 à 8.

13. Système de traitement d'un signal vidéo, ledit signal vidéo comprenant au moins une trame comprenant une première image, ledit système comprenant une entité selon l'une quelconque des revendications 9 à 11.

# Fig. 1

A (Starting Image/Frame)

```
┌─────────────────────┐
│        S200         │
│       FIRST         │
│     PROCESSING      │
└─────────────────────┘
```

A'
(Processed
Image/Frame)

```
┌─────────────────────┐
│        S400         │
│   DETERMINE THE     │
│    CORRECTION       │
│     FACTOR          │
└─────────────────────┘
```

CF
CORRECTION
FACTOR

```
┌─────────────────────┐
│        S500         │
│                     │
│   APPLY CF TO A     │
└─────────────────────┘
```

Fig. 2

# Fig. 3

# Fig. 4

F-A
(Original
Image/Frame)

S100
ACQUISITION

A

S200'
FIRST
PROCESSING

F-A'
(Processed
Image/Frame)

A

F/A

S300'
ANALYSIS

AI
INDICATOR

S400'
DETERMINE THE
CORRECTION
FACTOR

CF
CORRECTION
FACTOR

S500'
APPLY CF TO A

A

F-A''

S600
COMPRESSION

# Fig. 5a

Ai, xy

8x8 pixel
image

Ai

Fig. 5b

A

Fig. 6

Fig. 7

Fig. 8

# Fig. 9

EVALUATION OF THE FILTER LEVEL

HIGH-FREQUENCY
ERROR

910A
| 2972 |

BORDER DETAIL
ESTIMATION

910B
| XXX |

DARK AREA
DETAILS

910C
| YYY |

OTHER ESTIMATION
METHODS

910D
| ZZZ |

900
TRANSFER
FUNCTION

920
| 0.3 |

## EP 3 399 759 B1

**Patent documents cited in the description**

- US 2007076803 A1